Europäisches Patentamt

European Patent Office

Office européen des brevets

(19)

(11) Veröffentlichungsnummer : **0 178 537**
**B1**

(12) **EUROPÄISCHE PATENTSCHRIFT**

(45) Veröffentlichungstag der Patentschrift :
**23.03.88**

(21) Anmeldenummer : **85112477.6**

(22) Anmeldetag : **02.10.85**

(51) Int. Cl.⁴ : **F 16 H 53/02**, F 16 D  1/08,
 F 16 D  1/04

(54) **Verfahren zum Befestigen von Antriebselementen auf einer Welle mittels axial in diese einschneidender Keile, sowie diese selbst.**

(30) Priorität : **17.10.84 DE 3438080**

(43) Veröffentlichungstag der Anmeldung :
**23.04.86 Patentblatt 86/17**

(45) Bekanntmachung des Hinweises auf die Patenterteilung : **23.03.88 Patentblatt 88/12**

(84) Benannte Vertragsstaaten :
**AT BE CH DE FR GB IT LI LU NL SE**

(56) Entgegenhaltungen :
**DE-C-  369 674**
**GB-A- 2 029 300**
**"Übersicht  über  Kinematik/Getriebelehre",  H.J. Knab, Nürnberg, 1930, Seite 60**

(73) Patentinhaber : **INTERATOM Gesellschaft mit beschränkter Haftung**
**Friedrich-Ebert-Strasse**
**D-5060 Bergisch Gladbach 1 (DE)**

(72) Erfinder : **Maus, Wolfgang, Dipl.-Ing.**
**Gut Horst**
**D-5060 Bergisch-Gladbach 1 (DE)**
Erfinder : **Swars, Helmut, Dipl.-Ing.**
**Riedweg 11**
**D-5060 Bergisch-Gladbach 1 (DE)**

(74) Vertreter : **Mehl, Ernst, Dipl.-Ing. et al**
**Postfach 22 01 76**
**D-8000 München 22 (DE)**

Jouve, 18, rue St-Denis, 75001 Paris, France

EP 0 178 537 B1

## Beschreibung

Die vorliegende Erfindung betrifft ein Verfahren nach dem Oberbegriff des 1. Anspruchs, mit dem Antriebselemente, z. B. Nocken, Lager oder Zahnräder auf einer glatten Welle befestigt werden können, sowie besondere Ausgestaltungen der hierzu verwendeten Keile. Die Erfindung wird im folgenden am Beispiel der Herstellung von Nockenwellen für Verbrennungskraftmaschinen beschrieben, ist jedoch nicht auf diesen Anwendungsfall beschränkt, sondern überall dort einsetzbar, wo Bauteile unverdrehbar und axial unverschiebbar auf glatten Wellen befestigt werden sollen. Dies insbesondere dann, wenn für die Großserienfertigung Lösungen erforderlich werden, die weniger aufwendig sind als die sonst im Maschinenbau verwendete Befestigung mit einem Paßkeil (auch Feder genannt), der in eine zu diesem Zweck in die Welle eingefräste Ausnehmung eingelegt wird. Eine Übersicht der hierfür bereits vorgeschlagenen Lösungen geben die DE-A-23 36 241 sowie Standardwerke der Maschinenbaukunde, z. B. H.J. Knab : « Übersicht über Kinematik/ Getriebelehre », Nürnberg 1930.

Diesem Stand der Technik gegenüber besteht die Aufgabe der vorliegenden Erfindung darin, ein für diese Zwecke besser geeignetes Verfahren anzugeben, das es gestattet, als Grundmaterial für die Wellen statt teurer Drehteile erheblich billiger herzustellende Präzisionsrohre zu verwenden, die nicht vorbearbeitet werden müssen und auf denen die darauf zu befestigenden Teile in wenigen Arbeitsgängen rein formschlüssig fixiert werden.

Die Lösung dieser Aufgabe geschieht durch die im kennzeichnenden Teil des 1. Anspruchs angegebenen Mittel.

Das Eintreiben der Keile wird wesentlich erleichtert, wenn diese, wie z. B. aus der DE-C-369 674 bekannt, an ihrer Vorderseite (d. h. der mit der Wellenoberfläche in Kontakt kommenden, in Verschieberichtung vorn gelegenen Kante) mit einer Schneidkante versehen sind. Dabei können auch Längsseiten mit Schneidkanten versehen sein, die sich tiefer in die Wellenoberfläche eingraben und damit die Sicherheit gegen Verdrehen erhöhen.

Es wird eine Nut- und Keilverbindung hergestellt, bei der sich die Keile durch das Eintreiben die benötigte flache Nut in der Oberfläche der Welle selbst graben, was durch die vorgeschlagene Werkstoffpaarung erleichtert wird. Der dann an sich zu befürchtenden späteren Lockerung der Verbindung durch Vibrationen usw. wird durch eine einfache Sicherung der Keile und damit auch des befestigten Bauteils in seiner Lage begegnet.

Die im 2. Anspruch vorgeschlagene Ausgestaltung der Keile erleichtert zusätzlich einerseits das Eintreiben der Keile in die Wellenoberfläche und andererseits das Aufspreizen zur Sicherung in ihrer Lage.

Ein Ausführungsbeispiel der Erfindung ist in der Zeichnung dargestellt, und zwar zeigt

Figur 1 einen Längsaxialschnitt entsprechend der Linie I-I der Figur 2 und

Figur 2 einen Querschnitt entsprechend der Linie II-II der Figur 1.

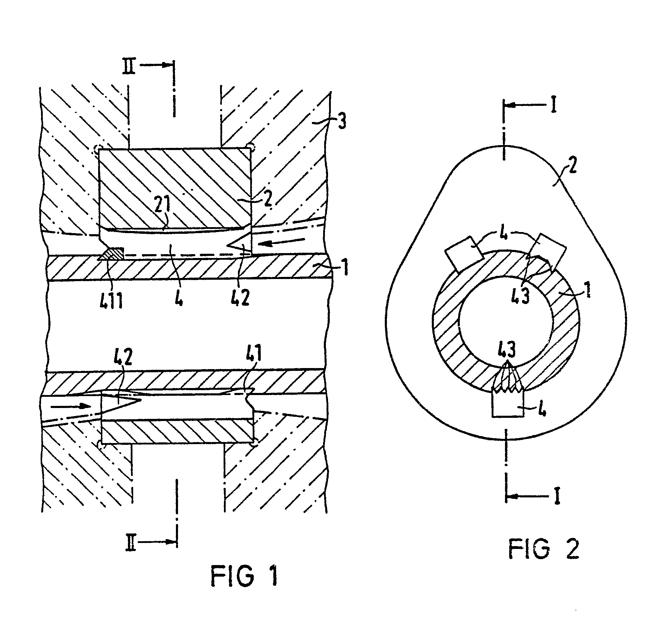

Auf einer glatten, aber nicht notwendigerweise wie gezeigt zylindrischen Welle 1 soll ein Nocken 2 befestigt werden. Dieser wird, von einer zangenartigen Vorrichtung 3 gehalten, in die gewünschte Lage in bezug auf die Welle 1 gebracht. Der Nocken 2 ist an seiner Innenkontur mit einer oder mehreren Nuten 21 versehen, in die Keile 4 in der durch die Pfeile angedeuteten Richtung eingetrieben werden, die gegenüber den Nuten 21 ein gewisses Übermaß aufweisen. Dadurch graben sich die Keile 4 in die Oberfläche der aus verhältnismäßig weichem Werkstoff hergestellten Welle 1 ein, was durch die Ausbildung einer Schneidkante 41 am vorderen Ende des Keiles 4 unterstützt wird ; diese Schneidkante kann auch aus einem besonderen Hartmetallteilchen 411 bestehen, das in bekannter Weise mit dem Körper des Keils 4 verlötet ist. Wie in der Figur 2 dargestellt, können die Keile 4 an ihrer Unterseite mit zusätzlichen Schneidkanten 43 versehen sein, mit deren Hilfe sie sich tiefer in die Oberfläche der Welle 1 eingraben können. Haben die Keile 4 ihre gewünschte Endlage erreicht, so wird mit Hilfe eines meißelartigen Werkzeuges in ihre Rückseite eine Kerbe 42 eingeschlagen, wodurch sie, und damit der Nocken 2, endgültig in dieser Lage fixiert werden.

## Patentansprüche

1. Verfahren zum Befestigen von Antriebselementen (2) auf einer glatten Welle (1) mittels Keilen (4), die in Nuten (21) einführbar sind, die axial an der Innenkontur der Antriebselemente angelegt sind, und die gegenüber den Nuten (21) radial Übermaß aufweisen, dadurch gekennzeichnet, daß die Welle (1) aus einem verhältnismäßig weichen, die Keile (4) dagegen aus einem verhältnismäßig harten Werkstoff hergestellt sind und daß die in ihre bestimmungsgemäße Lage gebrachten Keile (4) an ihrer Rückseite gespalten und gespreizt (42) werden.

2. Keil (4) zur Durchführung des Verfahrens nach Anspruch 1 der an seiner Vorderseite mit wenigstens einer Schneidkante (41) versehen ist, dadurch gekennzeichnet, daß die Schneidkanten (41) durch Teile (411) aus einem härteren Werkstoff gebildet werden, die mit dem Rest des Keils (4) unlösbar verbunden sind, der aus einem zähen Werkstoff hergestellt ist.

## Claims

1. Method of fastening motor elements (2) on a smooth shaft (1) by means of splines (4), which are capable of being introduced into grooves (21) which are cut axially at the inner contour of the motor elements and which, in respect of the grooves (21), are radially oversize, characterised in that the shaft (1) is manufactured from a relatively soft material, but the splines (4) from a relatively hard material and that the splines, (4) brought into their specified position, are split and forced apart (42) on their rear side.

2. Spline (4) for carrying out the method according to claim 1 which, on its front, is provided with at least one cutting edge (41), characterised in that the cutting edges (41) are formed by parts (411) made from a hard material, which are connected in an undetachable manner with the remainder of the spline (4) which is manufactured from a tough material.

**Revendications**

1. Procédé pour fixer des éléments d'entraînement (2) sur un arbre lisse (1) au moyen de clavettes (4) qui sont susceptibles d'être introduites dans des rainures (21), et qui sont appliquées axialement contre le contour interne de l'élément d'entraînement, et qui présentent une dimension radiale supérieure aux rainures (21), caractérisé en ce que l'arbre (1) est fabriqué avec un matériau relativement mou, les clavettes (4) étant elles fabriquées avec un matériau relativement plus dur, et que les clavettes (4), une fois qu'elles sont amenées dans leur position de destination, sont sur leur face arrière, fendues et écartées (42).

2. Clavette (4) pour la mise en œuvre du procédé selon la revendication 1, munie sur sa face avant d'au moins une arête coupante (41), caractérisée en ce que les arêtes coupantes (41) sont constituées par des parties (411) fabriquées avec un matériau encore plus dur, lesquelles sont reliées de façon non détachable avec le restant de la clavette (4) qui est faite avec un matériau de grande ténacité.

FIG 1

FIG 2